# EUROPÄISCHE PATENTSCHRIFT

(11) **EP 4 016 202 B1**
(45) Veröffentlichungstag und Bekanntmachung des Hinweises auf die Patenterteilung: **22.11.2023**
(21) Anmeldenummer: 20214204.8
(22) Anmeldetag: 15.12.2020
(51) Int. Cl.: G05B 13/02

(54) **VERFAHREN ZUM NACHBILDEN VON RAUSCHANTEILEN VON VERLUSTBEHAFTET AUFGEZEICHNETEN BETRIEBSSIGNALEN SOWIE STEUEREINRICHTUNG**
METHOD FOR REPRODUCING NOISE COMPONENTS OF LOSSY RECORDED OPERATING SIGNALS AND CONTROL DEVICE
PROCÉDÉ DE REPRODUCTION DES COMPOSANTES DE BRUIT DES SIGNAUX DE FONCTIONNEMENT ENREGISTRÉS AVEC PERTES ET DISPOSITIF DE COMMANDE

(43) Veröffentlichungstag der Anmeldung: 22.06.2022
(73) Patentinhaber: Siemens Aktiengesellschaft, 80333 München (DE)
(72) Erfinder: Depeweg, Stefan, 81673 München (DE); Heesche, Kai, 81539 München (DE)
(74) Vertreter: Siemens Patent Attorneys

(56) Entgegenhaltungen:
- WO-A1-2020/035685
- DE-A1- 19 531 967

## Beschreibung

Zum Steuern von komplexen technischen Systemen, wie z. B. Gasturbinen, Windturbinen, Dampfturbinen, Motoren, Robotern, Fertigungsanlagen oder Kraftfahrzeugen werden in zunehmendem Maße datengetriebene Verfahren des maschinellen Lernens eingesetzt. Hierbei werden insbesondere künstliche neuronale Netze darauf trainiert, abhängig von erfassten Betriebssignalen, wie z. B. Sensorwerten des technischen Systems steuerungsrelevante Betriebssignale zum Steuern des technischen Systems zu ermitteln.

Für ein erfolgreiches Training einer datengetriebenen Steuereinrichtung werden in der Regel große Mengen von Betriebsdaten des technischen Systems als Trainingsdaten benötigt. Die Trainingsdaten sollten dabei die Betriebszustände und andere Betriebsbedingungen des technischen Systems möglichst repräsentativ abdecken. Häufig liegen derartige Trainingsdaten in Form von Datenbanken vor, in denen eine große Menge von am technischen System aufgezeichneten Betriebssignalen gespeichert ist.

Aufgrund von Bandbreiten oder Speicherplatzbeschränkungen werden derartige Trainings-Betriebssignale jedoch in vielen Fällen vor ihrer Aufzeichnung verlustbehaftet komprimiert oder werden bereits verlustbehaftet am technischen System erfasst. Insbesondere bei Gasturbinen sind die zu Trainingszwecken verfügbaren Betriebssignale oft stark komprimiert.

Ein Beispiel einer derartigen verlustbehafteten Komprimierung oder Erfassung ist ein häufig auch als Dead-Banding bezeichnetes Verfahren, bei dem für ein jeweiliges Betriebssignal ein konstanter Wert aufgezeichnet wird, solange eine Änderung des Betriebssignals unterhalb eines vorgegebenen Schwellwerts bleibt. Auch bei einer Diskretisierung eines jeweiligen Betriebssignals tritt ein vergleichbarer Informationsverlust auf.

Ein solcher Informationsverlust, der häufig irreversibel ist, kann ein Training einer datengetriebenen Steuereinrichtung indessen signifikant beeinträchtigen. Bei bekannten Trainingsverfahren wird deshalb häufig eine geringere Kompression gewählt, was aber wiederum einen Speicherbedarf und/oder Bandbreitenbedarf erhöht. Auf der anderen Seite werden bei stark komprimierten Trainingsdaten Ungenauigkeiten bei der datengetriebenen Steuerung in Kauf genommen.

Die Druckschrift DE19531967 offenbart ein Lernverfahren zur neuronalen Modellierung von dynamischen Prozessen mit dem erreicht werden soll, dass das neuronale Netz in der Lage ist, Prozesse mit hohem Anteil an stochastischen Vorgängen zu regeln.

Es ist Aufgabe der vorliegenden Erfindung, ein Verfahren sowie eine Steuereinrichtung anzugeben, die ein effizienteres Training und/oder eine stärkere Komprimierung von Trainingsdaten erlauben.

Gelöst wird diese Aufgabe durch ein Verfahren mit den Merkmalen des Patentanspruchs 1, durch eine Steuereinrichtung mit den Merkmalen des Patentanspruchs 8, durch ein Computerprogrammprodukt mit den Merkmalen des Patentanspruchs 9 sowie durch ein computerlesbares Speichermedium mit den Merkmalen des Patentanspruchs 10.

Erfindungsgemäß werden Rauschanteile von verlustbehaftet aufgezeichneten Betriebssignalen eines technischen Systems nachgebildet, wobei ein Eingangs-Betriebssignal für eine Steuereinrichtung des technischen Systems sowie ein Ziel-Betriebssignal zum Steuern des technischen Systems verlustbehaftet aufgezeichnet sind. Anhand der aufgezeichneten Betriebssignale wird ein neuronales Netz darauf trainiert, anhand eines aufgezeichneten Eingangs-Betriebssignals ein aufgezeichnetes Ziel-Betriebssignal sowie eine statistische Verteilung eines stochastischen Anteils des aufgezeichneten Ziel-Betriebssignals zu reproduzieren. Dem trainierten neuronalen Netz wird dann ein aktuelles Eingangs-Betriebssignal des technischen Systems zugeführt. Erfindungsgemäß wird anhand des zugeführten aktuellen Eingangs-Betriebssignals und eines Rauschsignals ein Ausgabesignal mit einem der statistischen Verteilung nachgebildeten Rauschanteil erzeugt. Das Ausgabesignal wird dann als aktuelles Ziel-Betriebssignal zum Steuern des technischen Systems ausgegeben.

Der Erfindung liegt die Beobachtung zugrunde, dass durch eine verlustbehaftete Aufzeichnung von Betriebssignalen insbesondere auch Information über stochastische Schwankungen der Betriebssignale verloren geht. Derartige Schwankungen resultieren insbesondere aus einem anhand der verfügbaren Betriebssignale nicht determinierbaren Verhalten eines technischen Systems. Ein solches nicht determinierbares oder indeterministisches Verhalten bildet indessen bei vielen technischen Systemen eine wesentliche Komponente ihres Verhaltens. So sind beispielsweise bei Windturbinen die genauen Windverhältnisse und damit eine jeweils erzielbare Leistung in großen Teilen nicht determinierbar.

Entsprechend verhalten sich mit verlustbehafteten Betriebssignalen trainierte Simulatoren oder andere Steuereinrichtungen eines technischen Systems häufig deterministischer als ein reales System. Insofern tatsächliche statistische Schwankungen nicht realistisch abgebildet werden, kann eine Zuverlässigkeit oder ein Betriebsrisiko eines technischen Systems mittels einer so trainierten Steuereinrichtung oft nicht hinreichend genau bewertet werden.

Demgegenüber kann mittels der Erfindung zwar in der Regel nicht ein exakter Verlauf eines indeterministischen Verhaltens rekonstruiert werden, doch kann zumindest ein Rauschanteil eines Ziel-Betriebssignals nachgebildet werden, der eine realistische statistische Verteilung aufweist. Dies erlaubt in vielen Fällen auch bei verlustbehafteten Trainingsdaten wesentlich realistischere Prognosen über ein Verhalten des technischen Systems und damit ein effizienteres Training. Alternativ oder zusätzlich erlaubt die Erfindung auch eine stärkere Komprimierung von Trainingsdaten.

Zum Ausführen des erfindungsgemäßen Verfahrens sind eine entsprechende Steuereinrichtung, ein Computerprogrammprodukt sowie ein computerlesbares, vorzugsweise nichtflüchtiges Speichermedium vorgesehen.

Das erfindungsgemäße Verfahren sowie die erfindungsgemäße Steuereinrichtung können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Vorteilhafte Ausführungsformen und Weiterbildungen der Erfindung sind in den abhängigen Ansprüchen angegeben.

Nach einer vorteilhaften Ausführungsform der Erfindung kann als neuronales Netz ein bayessches neuronales Netz mit latenten, die statistische Verteilung darstellenden Parametern verwendet werden. Die latenten Parameter können dabei durch das Training insbesondere mittels eines variationalen Inferenzverfahrens und/oder mittels eines Markovketten-Monte-Carlo-Verfahrens inferiert werden. Das Rauschsignal kann in eine Eingabeschicht des bayesschen neuronalen Netzes eingespeist werden. Das Ausgabesignal kann dann durch das mit den inferierten latenten Parametern trainierte bayessche neuronale Netz aus dem aktuellen Eingangs-Betriebssignal und dem Rauschsignal erzeugt werden. Das bayessche neuronale Netz kann stochastische Komponenten modellieren und damit ein probabilistisches Verfahren des überwachten Lernens implementieren. Zum Trainieren eines solchen bayesschen neuronalen Netzes mit latenten Parametern stehen effiziente numerische Trainingsverfahren zur Verfügung.

Nach einer weiteren vorteilhaften Ausführungsform der Erfindung kann das neuronale Netz darauf trainiert werden, anhand eines aufgezeichneten Eingangs-Betriebssignals statistische Kennwerte der statistischen Verteilung zu reproduzieren. Zum Training kann dabei insbesondere eine Likelihood-Funktion als zu minimierende Fehlerfunktion verwendet werden. Hierfür steht eine Vielzahl von numerischen Standardverfahren zur Verfügung. Durch das trainierte neuronale Netz können dann für das zugeführte aktuelle Eingangs-Betriebssignal statistische Kennwerte ermittelt werden. Entsprechend kann das Rauschsignal abhängig von oder gemäß den ermittelten statistischen Kennwerten erzeugt und als Ausgabesignal ausgegeben werden. Als Kennwerte können insbesondere ein Mittelwert und eine Varianz der statistischen Verteilung verwendet werden. Darüber hinaus können als Kennwerte eine Standardabweichung, ein Wahrscheinlichkeitswert und/oder ein Verteilungstyp der statistischen Verteilung genutzt werden.

Nach einer weiteren vorteilhaften Ausführungsform der Erfindung kann das aktuelle Eingangs-Betriebssignal fortlaufend erfasst und dem neuronalen Netz zugeführt werden. Mittels des neuronalen Netzes kann damit ein nebenläufiger Simulator, insbesondere ein digitaler Zwilling des technischen Systems, vorzugsweise in Echtzeit betrieben werden. Aufgrund einer weitgehend realistischen Statistik des stochastischen Anteils des aktuellen Ziel-Betriebssignals kann der Simulator auch indeterministische Verhaltensweisen des technischen Systems hinreichend realistisch simulieren.

Ein Ausführungsbeispiel der Erfindung wird nachfolgend anhand der Zeichnung näher erläutert. Dabei zeigen jeweils in schematischer Darstellung:
- Figur 1: einen zeitlichen Verlauf von Betriebssignalen eines technischen Systems vor und nach ihrer verlustbehafteten Kompression,
- Figur 2: eine erste Steuereinrichtung gemäß einem ersten Ausführungsbeispiel der Erfindung in einer Trainingsphase,
- Figur 3: die erste Steuereinrichtung in einer Anwendungsphase,
- Figur 4: eine zweite Steuereinrichtung gemäß einem zweiten Ausführungsbeispiel der Erfindung in einer Trainingsphase und
- Figur 5: die zweite Steuereinrichtung in einer Anwendungsphase.

Insofern in den Figuren die gleichen oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

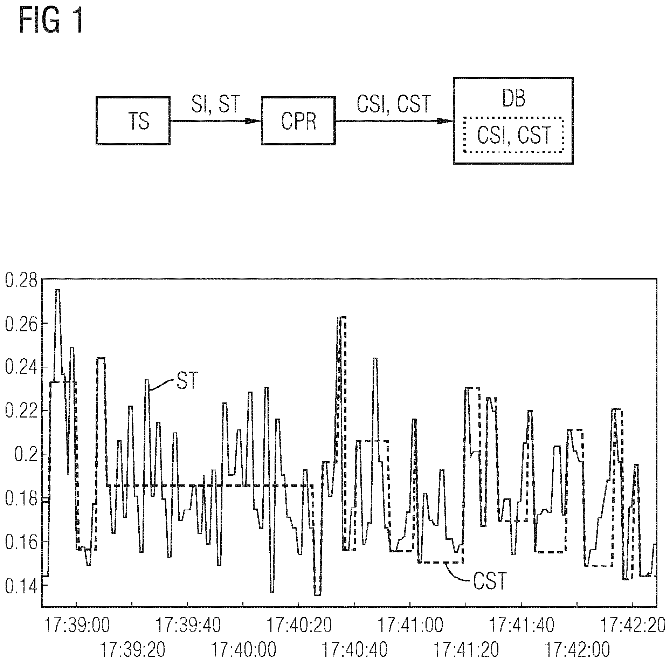

Figur 1 veranschaulicht einen zeitlichen Verlauf von Betriebssignalen eines technischen Systems TS vor und nach ihrer verlustbehafteten Kompression. Das technische System TS kann beispielsweise eine Gasturbine, eine Windturbine, ein Motor, ein Roboter, eine Fertigungsanlage, ein Kraftfahrzeug oder ein anderes komplexes technisches System sein.

Die Betriebssignale können am technischen System TS sensorisch gemessen oder anderweitig erfasst werden. Die Betriebssignale sollen zum datenbasierten Training einer Steuereinrichtung für das technische System TS oder für ein gleichartiges oder ähnliches technisches System aufgezeichnet werden.

Die Betriebssignale umfassen ein oder mehrere Eingangs-Betriebssignale SI, die als Input für eine Steuereinrichtung des zu steuernden technischen Systems dienen sollen. Die Eingangs-Betriebssignale SI können beispielsweise Sensordaten, Messwerte, Zustandsdaten, Steueraktionsdaten oder andere am oder für das technische System TS zu Steuerungszwecken erfasste Daten umfassen oder repräsentieren. Bei einer Turbine können die Eingangs-Betriebssignale SI z. B. Drehzahldaten, Temperaturdaten oder Druckdaten umfassen.

Die Betriebssignale umfassen weiterhin ein oder mehrere Ziel-Betriebssignale ST, die zum effizienten Steuern des technischen Systems TS benötigt werden. Die Ziel-Betriebssignale ST können insbesondere optimierte Steueraktionen, Daten über Auswirkungen von Steueraktionen, schwer messbare Daten, Prognosedaten oder andere steuerungsrelevante Signale oder Daten umfassen oder repräsentieren. Bei einer Turbine können die Ziel-Betriebssignale ST beispielsweise Daten über eine Verbrennungsdynamik, Vibrationsdaten und/oder Daten über eine Temperatur- oder Druckverteilung an schwer zugänglichen Stellen der Turbine umfassen.

Beim Betrieb eines komplexen technischen Systems fallen in der Regel große Mengen an Betriebssignalen, hier SI und ST, an. Aus diesem Grund werden diese in der Regel komprimiert. Um eine ausreichend starke Kompression zu erreichen, werden hierbei häufig verlustbehaftete Kompressionsverfahren angewandt. Bei einem auch als Dead-Banding bezeichneten Kompressionsverfahren wird für ein jeweiliges Betriebssignal ein konstanter Wert aufgezeichnet, solange eine Änderung des Betriebssignals unterhalb eines vorgegebenen Schwellwerts bleibt. Alternativ oder zusätzlich können die Betriebssignale auch durch eine mehr oder weniger grobe Diskretisierung komprimiert werden.

Zum Zweck der Komprimierung werden die Betriebssignale SI und ST vom technischen System TS zu einer Komprimiereinrichtung CPR übermittelt. Die Komprimiereinrichtung CPR komprimiert ein jeweiligen Eingangs-Betriebssignal SI verlustbehaftet zu einem komprimierten Eingangs-Betriebssignal CSI sowie ein jeweiliges Ziel-Betriebssignal ST verlustbehaftet zu einem komprimierten Ziel-Betriebssignal CST. Die komprimierten Eingangs-Betriebssignale CSI und die komprimierten Ziel-Betriebssignale CST werden in einer Datenbank DB gespeichert.

Auf diese Weise können eine oder mehrere Datenbanken mit einer großen Menge von komprimierten Betriebssignalen CSI und CST von einem oder mehreren technischen Systemen erstellt werden. Wie oben bereits erwähnt, sollen die aufgezeichneten Betriebssignale CSI und CST im Zusammenhang mit der Erfindung dazu verwendet werden, eine lernbasierte Steuereinrichtung für ein zu steuerndes technisches System datengetrieben zu trainieren. Es kann erwartet werden, dass ein Training umso effizienter ist, je ähnlicher das zu steuernde technische System zu dem oder den technischen Systemen TS ist, von denen die Trainingsdaten, hier CSI und CST, stammen.

Die Steuereinrichtung soll anhand der komprimierten Betriebssignale CSI und CST darauf trainiert werden, anhand von Eingangs-Betriebssignalen SI eines zu steuernden technischen Systems optimierte Ziel-Betriebssingale ST zum Steuern dieses technischen Systems zu ermitteln oder vorherzusagen. Auf diese Weise können auch schwer zu messende oder erst zu einem späteren Zeitpunkt verfügbare Ziel-Betriebssignale ermittelt oder rekonstruiert werden, die zum Steuern des technischen Systems nützlich sind.

Wie oben bereits erwähnt, geht durch die verlustbehaftete Kompression allerdings Information der originalen Betriebssignale SI und ST verloren, was sich insbesondere auf einen stochastischen Rauschanteil der originalen Betriebssignale SI und ST auswirkt.

Eine durch Dead-Banding bewirkte Veränderung eines originalen Ziel-Betriebssignals ST zum komprimierten Ziel-Betriebssignal CST wird im unteren Teil von Figur 1 veranschaulicht. Dabei wird das originale Ziel-Betriebssignal ST durch eine durchgezogene Linie und das komprimierte Ziel-Betriebssignal CST durch eine gestrichelte Linie dargestellt. Die Betriebssignale sind in willkürlichen Einheiten gegen die Zeit aufgetragen. Es zeigt sich, dass viele feinere Strukturen des originalen Ziel-Betriebssignals ST im komprimierten Ziel-Betriebssignal CST nicht mehr wiederzufinden sind. Insbesondere sind stochastisch erscheinende Schwankungen oder Rauschanteile des originalen Ziel-Betriebssignals ST im komprimierten Ziel-Betriebssignal CST nicht mehr ohne weiteres erkennbar.

Durch das erfindungsgemäße Trainingsverfahren soll ein neuronales Netz darauf trainiert werden, insbesondere eine statistische Verteilung eines stochastischen Anteils des aufgezeichneten Ziel-Betriebssignals CST zu reproduzieren. Mittels des trainierten neuronalen Netzes und eines Rauschgenerators kann dann ein Rauschanteil des Ziel-Betriebssignals nachgebildet werden, der eine entsprechende statistische Verteilung aufweist.

Unter einem Training sei hierbei allgemein eine Optimierung einer Abbildung von Eingabedaten eines Maschinenlernmodells, hier eines neuronalen Netzes, auf dessen Ausgabedaten verstanden. Diese Abbildung wird nach vorgegebenen, gelernten und/oder zu lernenden Kriterien während seiner Trainingsphase optimiert. Als Kriterien können beispielsweise ein Reproduktionsfehler, ein Prädiktionsfehler, ein Erfolg einer ausgegebenen Steueraktion oder eine Ähnlichkeit hinsichtlich einer statistischen Verteilung herangezogen werden. Durch das Training können beispielsweise Vernetzungsstrukturen von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden. Für derartige Optimierungsprobleme auf dem Gebiet des maschinellen Lernens sind eine Vielzahl von effizienten Optimierungsverfahren verfügbar. Unter einem Optimieren sei dabei auch stets eine Annäherung an ein Optimum verstanden.

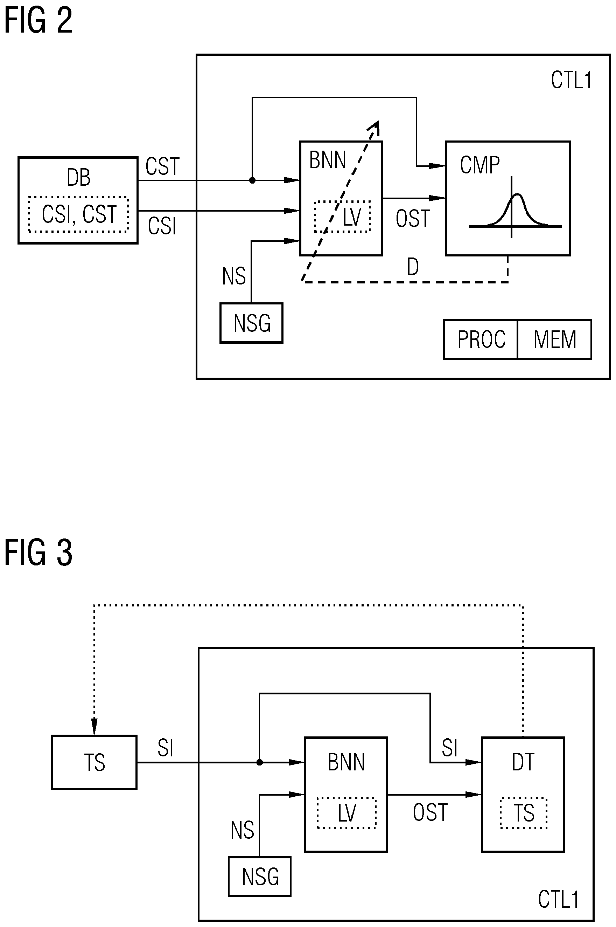

Figur 2 veranschaulicht ein Training einer ersten Steuereinrichtung CTL1 gemäß einem ersten Ausführungsbeispiel der Erfindung. Die erste Steuereinrichtung CTL1 umfasst einen oder mehrere Prozessoren PROC zum Ausführen von Verfahrensschritten der Steuereinrichtung CTL1 sowie einen oder mehrere Speicher MEM zum Speichern von zu verarbeitenden Daten.

Die erste Steuereinrichtung CTL1 umfasst weiterhin ein bayessches neuronales Netz BNN sowie einen Rauschgenerator NSG. Der Rauschgenerator NSG dient zum Generieren eines Rauschsignals NS, z. B. mittels eines Zufallszahlengenerators, der Pseudozufallszahlen oder andere Zufallsdaten generiert. Der Begriff Zufallsdaten oder Zufallszahlen soll dem üblichen Sprachgebrauch folgend auch Pseudozufallsdaten bzw. Pseudozufallszahlen umfassen. Zum Training des bayesschen neuronalen Netzes BNN werden die in der Datenbank DB aufgezeichneten komprimierten Eingangs-Betriebssignale CSI sowie die dort aufgezeichneten komprimierten Ziel-Betriebssignale CST von der ersten Steuereinrichtung CTL1 ausgelesen und in eine Eingabeschicht des bayesschen neuronalen Netzes BNN als Trainingsdaten eingespeist. Als weitere Eingabedaten werden in die Eingabeschicht des bayesschen neuronalen Netzes BNN das generierte Rauschsignal NS bzw. dessen Datenwerte eingespeist.

Das bayessche neuronale Netz BNN kann als neuronales Netz mit einer stochastischen, statistische Verteilungen modellierenden Komponente aufgefasst werden. Insbesondere kann mit dem bayesschen neuronalen Netz BNN ein probabilistisches Verfahren des überwachten Lernens implementiert werden.

Gemäß dem ersten Ausführungsbeispiel soll das bayessche neuronale Netz BNN anhand der komprimierten Trainingsdaten CSI und CST sowie des Rauschsignals NS darauf trainiert werden, anhand eines Eingangs-Betriebssignals sowie eines Rauschsignals ein Ziel-Betriebssignal OST mit einem indeterministischen, stochastischen Anteil zu generieren. Dabei soll eine statistische Verteilung des generierten stochastischen Anteils einer statischen Verteilung eines stochastischen Anteils des komprimierten Ziel-Betriebssignals CST entsprechen. Das Ziel-Betriebssignal OST soll dabei als Ausgabesignal bzw. in Form von Ausgabedaten über eine Ausgabeschicht des bayesschen neuronalen Netzes BNN ausgegeben werden.

Ein solcher stochastischer Anteil des komprimierten Ziel-Betriebssignals CST macht sich insbesondere durch statistische Schwankungen des komprimierten Ziel-Betriebssignals CST bei gleichen Werten des Eingangs-Betriebssignals CSI bemerkbar. Eine statistische Verteilung dieser Schwankungen kann beispielsweise durch Mittelwerte, Varianzen oder andere statistische Kenngrößen der Schwankungen quantifiziert werden.

Gemäß dem ersten Ausführungsbeispiel wird die indeterministische Natur dieser Schwankungen durch sogenannte latente Parameter LV des bayesschen neuronalen Netzes BNN modelliert, dargestellt oder repräsentiert. Die latenten Parameter LV stellen damit gewissermaßen die statistische Verteilung des stochastischen Anteils des Ziel-Betriebssignals dar.

Die latenten Parameter LV werden im Zuge des Trainings des bayesschen neuronalen Netzes BNN vorzugsweise für jeden Datenpunkt der Betriebssignale CSI und CST aus den statistischen Schwankungen inferiert. Dabei werden die latenten Parameter LV so geschätzt, identifiziert oder eingestellt, dass die durch das eingespeiste Rauschsignal NS induzierten indeterministischen Schwankungen den stochastischen Anteil des komprimierten Ziel-Betriebssignals CST hinsichtlich seiner statistischen Verteilung reproduzieren.

Zu diesem Zweck erfolgt ein Vergleich CMP einer statistischen Verteilung der komprimierten Ziel-Betriebssignale CST mit einer statistischen Verteilung des Ausgabesignals OST. Dabei können insbesondere Mittelwerte und/oder Varianzen der statistischen Verteilungen verglichen werden. Der Vergleich CMP ist in Figur 2 außerhalb des bayesschen neuronalen Netzes BNN dargestellt. Alternativ oder zusätzlich kann der Vergleich CMP kann aber auch ganz oder teilweise innerhalb des bayesschen neuronalen Netzes BNN ausgeführt werden.

Eine beim Vergleich CMP ermittelte Abweichung D zwischen den verglichenen statistischen Verteilungen wird - wie in Figur 2 durch einen strichlierten Pfeil angedeutet - zum bayesschen neuronalen Netzwerk BNN zurückgeführt. Die latenten Parameter LV sowie die neuronalen Gewichte des bayesschen neuronalen Netzes BNN werden damit so optimiert, dass die Abweichung D minimiert wird. Auf diese Weise wird das bayessche neuronale Netz BNN mit seinen latenten Parametern LV darauf trainiert, anhand eines Eingangs-Betriebssignals ein Ziel-Betriebssignal sowie dessen stochastischen Anteil hinsichtlich seiner statistischen Verteilung zu reproduzieren.

Die Inferenz der latenten Parameter LV kann insbesondere mittels eines variationalen Inferenzverfahrens oder mittels eines Markov-Ketten-Modells ausgeführt werden. Diese und weitere effiziente Trainings- und Inferenzverfahren für bayessche neuronale Netze sind beispielsweise in "Learning und Policy Search in Stochastic Dynamical Systems with Bayesian Neural Networks" von Stefan Depeweg et al., ICLR 2017; in "Decomposition of Uncertainty in Bayesian Deep Learning for Efficient and Risk-sensitive Learning" von Stefan Depeweg et al., International Conference on Machine Learning, 2018 oder in "Pattern Recognition and Machine Learning" von Christopher M. Bishop, Springer 2011, beschrieben.

Die latenten Parameter LV und deren Anpassung an die durch das Rauschsignal NS induzierten indeterministischen Schwankungen sind im ersten Ausführungsbeispiel für das korrekte stochastische Verhalten des ausgegebenen Ziel-Betriebssignals OST wesentlich. Ohne die Implementierung der latenten Parameter LV im bayesschen neuronalen Netz BNN würde das trainierte bayessche neuronale Netz BNN anders als das reale technische System TS für gleichen Input stets den gleichen Output liefern, sich also deterministisch verhalten. Das vom bayesschen neuronalen Netz BNN mit den latenten Parametern LV ausgegebene Ziel-Betriebssignal OST verhält sich dagegen zumindest teilweise indeterministisch und weist eine weitgehend realistische statistische Verteilung auf. Die neuronalen Gewichte des bayesschen neuronalen Netzes BNN repräsentieren oder modellieren dabei gewissermaßen einen deterministischen Anteil des Ziel-Betriebssignals, d. h. einen determinstischen Funktionszusammenhang zwischen Eingangs- und Ziel-Betriebssignal. Demgegenüber modellieren oder repräsentieren die latenten Parameter LV gewissermaßen einen stochastischen Anteil, eine Rauschstruktur oder einen Rauschanteil.

Figur 3 veranschaulicht die erste Steuereinrichtung CTL1 mit dem trainierten bayesschen neuronalen Netz BNN in einer Anwendungsphase.

Die erste Steuereinrichtung CTL1 empfängt hierbei vom technischen System TS ein aktuelles Eingangs-Betriebssignal SI und speist dieses in die Eingabeschicht des trainierten bayesschen neuronalen Netzes BNN ein. Das technische System TS kann dabei das technische System sein, von dem die Trainingsdaten stammen, oder ein gleichartiges oder ähnliches technisches System.

Als weitere Eingabedaten werden ein vom Rauschgenerator NSG generiertes Rauschsignal NS bzw. dessen Datenwerte in die Eingabeschicht des trainierten bayesschen neuronalen Netzes BNN eingespeist. Aus dem aktuellen Eingangs-Betriebssignal SI sowie dem eingespeisten Rauschsignal NS wird durch das trainierte bayessche neuronale Netz BNN zumindest indirekt abhängig von den inferierten latenten Parametern LV ein Ausgabesignal OST erzeugt, das als aktuelles Ziel-Betriebssignal über die Ausgabeschicht des trainierten bayesschen neuronalen Netzes BNN ausgegeben wird. Das Ausgabesignal OST weist einen nachgebildeten oder rekonstruierten Rauschanteil auf, der zu einem Rauschanteil des tatsächlichen Ziel-Betriebssignals ST hinsichtlich seiner Statistik ähnlich ist. Durch die latenten Parameter LV wird das bayessche neuronale Netz BNN dazu befähigt, infolge der zufallsbasierten Anregung durch das Rauschsignal NS, einen realistischen indeterministischen Rauschanteil für das Ausgabesignal OST zu generieren bzw. nachzubilden.

Das generierte aktuelle Ziel-Betriebssignal OST wird vom trainierten bayesschen neuronalen Netz BNN zu einem in der ersten Steuereinrichtung CTL1 implementierten digitalen Zwilling DT des technischen Systems TS übermittelt. Zusätzlich wird in den digitalen Zwilling DT auch das aktuelle Eingangs-Betriebssignal SI eingespeist.

Der digitale Zwilling DT fungiert als nebenläufiger Simulator des technischen Systems TS. Als solcher führt er eine parallel zum Betrieb des technischen Systems TS mitlaufende und fortlaufend mit Betriebssignalen, hier SI und OST des technischen Systems TS aktualisierte Simulation des technischen Systems TS aus. Eine solche in Echtzeit mitlaufende Simulation des technischen Systems TS erlaubt es, das technische System TS detailliert zu überwachen und für dessen effiziente Steuerung relevante Zustandsdaten des technischen Systems TS simulativ zu ermitteln. Mit Hilfe derartiger durch den digitalen Zwilling DT simulativ ermittelter Daten kann das technische System TS - wie in Figur 3 durch einen punktierten Pfeil angedeutet - besonders effektiv und vorausschauend gesteuert werden.

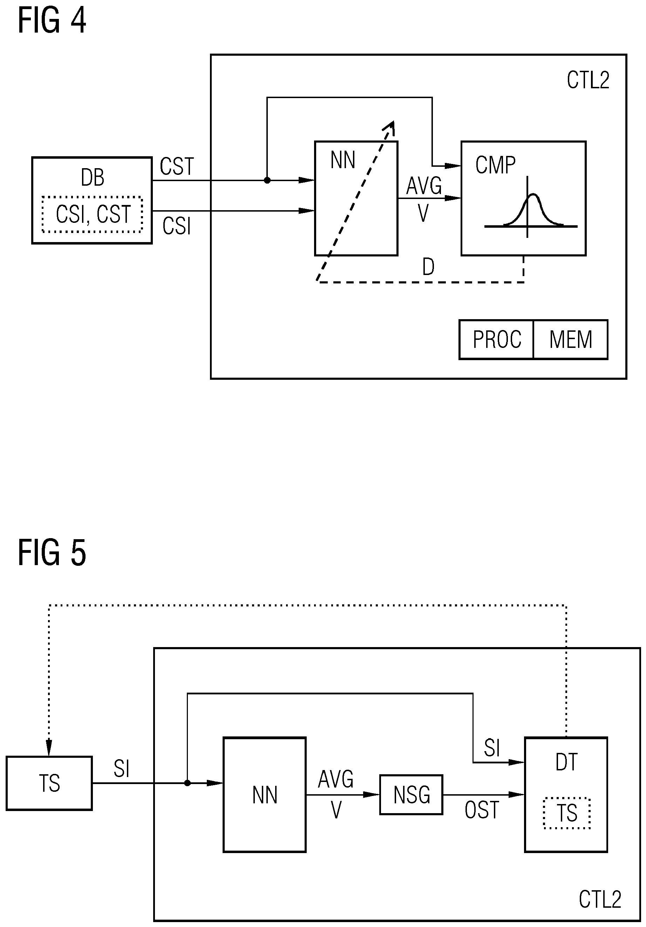

Figur 4 veranschaulicht ein Training einer zweiten Steuereinrichtung CTL2 gemäß einem zweiten Ausführungsbeispiel der Erfindung.

Die zweite Steuereinrichtung CTL2 umfasst ein zu trainierendes neuronales Netz NN. Zum Training des neuronalen Netzes NN werden die in der Datenbank DB aufgezeichneten komprimierten Eingangs-Betriebssignale CSI sowie die komprimierten Ziel-Betriebssignale CST von der zweiten Steuereinrichtung CTL2 ausgelesen und in eine Eingabeschicht des neuronalen Netzes NN als Trainingsdaten eingespeist.

Das neuronale Netz NN soll anhand der komprimierten Trainingsdaten CSI und CST darauf trainiert werden, anhand eines Eingangs-Betriebssignals statistische Kennwerte einer statistischen Verteilung des stochastischen Anteils des komprimierten Ziel-Betriebssignals CST zu reproduzieren.

Im vorliegenden Ausführungsbeispiel sollen als statistische Kennwerte ein Mittelwert AVG sowie eine Varianz V einer jeweiligen statistischen Verteilung reproduziert und über eine Ausgabeschicht des neuronalen Netzes NN ausgegeben werden.

Im Rahmen des Trainings des neuronalen Netzes NN erfolgt ein Vergleich CMP zwischen den komprimierten Ziel-Betriebssignalen CST und den vom neuronalen Netz NN ausgegebenen Kennwerten AVG und V. Der Vergleich CMP erfolgt dahingehend, ob und inwieweit eine statistische Verteilung des stochastischen Anteils des komprimierten Ziel-Betriebssignals CST mit dem ausgegebenen Mittelwert AVG und der ausgegebenen Varianz V verträglich ist bzw. davon abweicht. Als quantitatives Maß hierfür wird eine jeweilige Abweichung oder ein jeweiliger Reproduktionsfehler D ermittelt und zum Training des neuronalen Netzes NN - wie in Figur 4 durch einen strichlierten Pfeil angedeutet - zum neuronalen Netz NN zurückgeführt. Als Fehlerfunktion kann dabei insbesondere eine sogenannte Likelihood-Funktion verwendet werden.

Beim Training des neuronalen Netzes NN werden dessen neuronale Gewichte so eingestellt, dass der Reproduktionsfehler D bzw. die Fehlerfunktion minimiert werden. Zu diesem Zweck stehen eine Vielzahl von effizienten numerischen Standardverfahren zur Verfügung.

Figur 5 zeigt die zweite Steuereinrichtung CTL2 mit dem trainierten neuronalen Netz NN in einer Anwendungsphase beim Steuern eines technischen Systems TS. Dieses technische System TS ist vorzugsweise dasselbe, ein gleichartiges oder ein ähnliches technisches System wie das technische System, von dem die Trainingsdaten CSI und CST stammen.

Zum Steuern des technischen Systems TS erfasst die zweite Steuereinrichtung CTL2 ein aktuelles Eingangs-Betriebssignal SI des technischen Systems TS und speist das aktuelle Eingangs-Betriebssignal SI in eine Eingabeschicht des trainierten neuronalen Netzes NN ein. Das trainierte neuronale Netz NN generiert dann für vorzugsweise jeden Datensatz oder jeden Zeitreihenpunkt des aktuellen Eingangs-Betriebssignals SI statistische Kennwerte AVG und V.

Die statistischen Kennwerte AVG und V werden über die Ausgabeschicht des trainierten neuronalen Netzes NN ausgegeben und einem Rauschgenerator NSG der zweiten Steuereinrichtung CTL2 zugeführt. Der Rauschgenerator NSG dient zum Generieren von Zufallsdaten oder allgemein eines Rauschsignals, wobei ein Mittelwert und eine Varianz der generierten Zufallsdaten einstellbar sind. Im vorliegenden Ausführungsbeispiel generiert der Rauschgenerator NSG für jedes Paar von zugeführten statistischen Kennwerten, hier AVG und V, ein oder mehrere Ausgabewerte, die im statistischen Mittel den vorgegebenen Mittelwert AVG und die vorgegebene Varianz V aufweisen. Die Ausgabewerte werden vom Rauschgenerator NSG als Ausgabesignal OST ausgegeben. Das Ausgabesignal OST weist damit einen nachgebildeten, indeterministischen Rauschanteil mit einer realistischen statistischen Verteilung auf.

Wie im ersten Ausführungsbeispiel wird das Ausgabesignal OST als aktuelles Ziel-Betriebssignal zusammen mit dem aktuellen Eingangs-Betriebssignal SI zu einem digitalen Zwilling DT des technischen Systems TS übermittelt. Der digitale Zwilling DT kann wie oben bereits erläutert, in vorteilhafter Weise zum Überwachen oder Steuern des technischen Systems TS verwendet werden.

Aufgrund des realistisch nachgebildeten Rauschanteils des Ziel-Betriebssignals OST können auch bei verlustbehafteten Trainingsdaten wesentlich realistischere Prognosen über ein Verhalten des technischen Systems TS erzielt werden. Davon profitieren insbesondere Prognosen über eine Zuverlässigkeit oder ein Betriebsrisiko des technischen Systems TS.

## Patentansprüche

1. Computerimplementiertes Verfahren zum Nachbilden von Rauschanteilen von verlustbehaftet aufgezeichneten Betriebssignalen eines technischen Systems (TS), wobei
a) Eingangs-Betriebssignale für eine Steuereinrichtung des technischen Systems (TS) sowie Ziel-Betriebssignale zum Steuern des technischen Systems (TS) verlustbehaftet aufgezeichnet sind,
b) ein neuronales Netz (NN, BNN) anhand der aufgezeichneten Betriebssignale (CSI, CST) darauf trainiert wird, anhand eines aufgezeichneten Eingangs-Betriebssignals (CSI) ein aufgezeichnetes Ziel-Betriebssignal (CST) sowie eine statistische Verteilung eines stochastischen Anteils des aufgezeichneten Ziel-Betriebssignals (CST) zu reproduzieren,
c) dem trainierten neuronalen Netz (NN, BNN) ein aktuelles Eingangs-Betriebssignal (SI) des technischen Systems (TS) zugeführt wird,
d) anhand des zugeführten aktuellen Eingangs-Betriebssignals (SI) und eines Rauschsignals (NS) ein Ausgabesignal (OST) mit einem der statistischen Verteilung nachgebildeten Rauschanteil erzeugt wird, und
e) das Ausgabesignal (OST) als aktuelles Ziel-Betriebssignal zum Steuern des technischen Systems (TS) ausgegeben wird.

2. Verfahren nach Anspruch 1, **dadurch gekennzeichnet,**
**dass** als neuronales Netz ein bayessches neuronales Netz (BNN) mit latenten, die statistische Verteilung darstellenden Parametern (LV) verwendet wird,
**dass** die latenten Parameter (LV) durch das Training inferiert werden,
**dass** das Rauschsignal (NS) in eine Eingabeschicht des bayesschen neuronalen Netzes (BNN) eingespeist wird, und dass das Ausgabesignal (OST) durch das mit den inferierten latenten Parametern (LV) trainierte bayessche neuronale Netz (BNN) aus dem aktuellen Eingangs-Betriebssignal (SI) und dem Rauschsignal (NS) erzeugt wird.

3. Verfahren nach Anspruch 2, **dadurch gekennzeichnet,**
**dass** die Inferenz mittels eines variationalen Inferenzverfahrens und/oder mittels eines Markovketten-Monte-Carlo-Verfahrens ausgeführt wird.

4. Verfahren nach einem der vorhergehenden Ansprüche, **dadurch gekennzeichnet,**
**dass** das neuronale Netz (NN) darauf trainiert wird, anhand eines aufgezeichneten Eingangs-Betriebssignals (CSI) statistische Kennwerte (AVG, V) der statistischen Verteilung zu reproduzieren,
**dass** durch das trainierte neuronale Netz (NN) für das zugeführte aktuelle Eingangs-Betriebssignal (SI) statistische Kennwerte (AVG, V) ermittelt werden, und
**dass** das Rauschsignal abhängig von den ermittelten statistischen Kennwerten (AVG, V) erzeugt und als Ausgabesignal (OST) ausgegeben wird.

5. Verfahren nach Anspruch 4, **dadurch gekennzeichnet,**
**dass** zum Training eine Likelihood-Funktion als zu minimierende Fehlerfunktion verwendet wird.

6. Verfahren nach Anspruch 4 oder 5, **dadurch gekennzeichnet,**
**dass** als Kennwerte ein Mittelwert (AVG), eine Varianz (V), eine Standardabweichung, ein Wahrscheinlichkeitswert und/oder ein Verteilungstyp der statistischen Verteilung verwendet werden.

7. Verfahren nach einem der vorhergehenden Ansprüche, **dadurch gekennzeichnet,**
**dass** das aktuelle Eingangs-Betriebssignal (SI) fortlaufend erfasst und dem neuronalen Netz (NN, BNN) zugeführt wird, und
**dass** mittels des neuronalen Netzes (NN, BNN) ein nebenläufiger Simulator (DT), insbesondere ein digitaler Zwilling des technischen Systems (TS) betrieben wird.

8. Steuereinrichtung (CTL1, CTL2) zum Steuern eines technischen Systems (TS), eingerichtet zum Ausführen eines Verfahrens nach einem der vorhergehenden Ansprüche.

9. Computerprogrammprodukt, umfassend Befehle, die bei der Ausführung des Programms durch einen Computer diesen veranlassen, ein Verfahren nach einem der Ansprüche 1 bis 7 auszuführen.

10. Computerlesbares Speichermedium mit einem Computerprogrammprodukt nach Anspruch 9.

## Claims

1. Computer-implemented method for reproducing noise components of lossy recorded operating signals of a technical system (TS), wherein
a) input operating signals for a control device of the technical system (TS) and target operating signals for controlling the technical system (TS) are lossy recorded,
b) on the basis of the recorded operating signals (CSI, CST), a neural network (NN, BNN) is trained to reproduce a recorded target operating signal (CST) and a statistical distribution of a stochastic component of the recorded target operating signal (CST) on the basis of a recorded input operating signal (CSI),
c) a current input operating signal (SI) of the technical system (TS) is supplied to the trained neural network (NN, BNN),
d) an output signal (OST) having a noise component modelled on the statistical distribution is generated on the basis of the supplied current input operating signal (SI) and a noise signal (NS), and
e) the output signal (OST) is output as the current target operating signal for controlling the technical system (TS).

2. Method according to Claim 1, **characterized**
**in that** a Bayesian neural network (BNN) having latent parameters (LV) representing the statistical distribution is used as the neural network,
**in that** the latent parameters (LV) are inferred by the training, in that the noise signal (NS) is fed into an input layer of the Bayesian neural network (BNN), and
**in that** the output signal (OST) is generated by means of the Bayesian neural network (BNN), which has been trained with the inferred latent parameters (LV), from the current input operating signal (SI) and the noise signal (NS).

3. Method according to Claim 2, **characterized in that** the inference is carried out by means of a variational inference method and/or by means of a Markov chain Monte Carlo method.

4. Method according to one of the preceding claims, **characterized**
**in that** the neural network (NN) is trained to reproduce statistical characteristic values (AVG, V) of the statistical distribution on the basis of a recorded input operating signal (CSI),
**in that** statistical characteristic values (AVG, V) are determined for the supplied current input operating signal (SI) by the trained neural network (NN), and
**in that** the noise signal is generated depending on the determined statistical characteristic values (AVG, V) and output as an output signal (OST).

5. Method according to Claim 4, **characterized in that** a likelihood function is used as an error function to be minimized for the training.

6. Method according to Claim 4 or 5, **characterized in that** a mean value (AVG), a variance (V), a standard deviation, a probability value and/or a distribution type of the statistical distribution are used as characteristic values.

7. Method according to one of the preceding claims, **characterized**
**in that** the current input operating signal (SI) is continuously detected and fed to the neural network (NN, BNN), and
**in that** a concurrent simulator (DT), in particular a digital twin of the technical system (TS), is operated by means of the neural network (NN, BNN).

8. Control device (CTL1, CTL2) for controlling a technical system (TS), designed for carrying out a method according to one of the preceding claims.

9. Computer program product, comprising commands which, when the program is executed by means of a computer, cause the latter to carry out a method according to one of Claims 1 to 7.

10. Computer-readable memory medium having a computer program product according to Claim 9.

## Revendications

1. Procédé mis en oeuvre par ordinateur pour reproduire des composantes de bruit de signaux de fonctionnement enregistrés avec perte d'un système technique (TS), dans lequel
a) des signaux de fonctionnement d'entrée pour un dispositif de commande du système technique (TS) ainsi que des signaux de fonctionnement cible pour la commande du système technique (TS) sont enregistrés avec des pertes,
b) un réseau neuronal (NN, BNN) est entraîné, à l'aide des signaux de fonctionnement enregistrés (CSI, CST), pour reproduire, à l'aide d'un signal de fonctionnement d'entrée enregistré (CSI), un signal de fonctionnement cible enregistré (CST) ainsi qu'une distribution statistique d'une partie stochastique du signal de fonctionnement cible enregistré (CST),
c) un signal d'exploitation d'entrée (SI) actuel du système technique (TS) est envoyé au réseau neuronal entraîné (NN, BNN),
d) à l'aide du signal de fonctionnement d'entrée (SI) actuel fourni et d'un signal de bruit (NS), un signal de sortie (OST) est généré avec une séquence de bruit reproduisant la distribution statistique, et
e) le signal de sortie (OST) est émis en tant que signal de fonctionnement cible actuel pour commander le système technique (TS).

2. Procédé selon la revendication 1, **caractérisé en ce que**
le réseau neuronal utilisé est un réseau neuronal bayésien (BNN) avec des paramètres latents (LV) représentant la distribution statistique,
les paramètres latents (LV) sont inférés par l'entraînement,
le signal de bruit (NS) est injecté dans une couche d'entrée du réseau neuronal bayésien (BNN), et **en ce que** le signal de sortie (OST) est généré par le réseau neuronal bayésien (BNN) entraîné avec les paramètres latents inférés (LV) à partir du signal de fonctionnement d'entrée actuel (SI) et du signal de bruit (NS).

3. Procédé selon la revendication 2, **caractérisé en ce que**
l'inférence est effectuée au moyen d'une méthode d'inférence variationnelle et/ou au moyen d'une méthode de Monte Carlo à chaîne de Markov.

4. Procédé selon l'une des revendications précédentes, **caractérisé en ce que**
le réseau neuronal (NN) est entraîné pour reproduire des valeurs caractéristiques statistiques (AVG, V) de la distribution statistique à l'aide d'un signal de fonctionnement d'entrée (CSI) enregistré,
des valeurs caractéristiques statistiques (AVG, V) sont déterminées par le réseau neuronal (NN) entraîné pour le signal de fonctionnement d'entrée (SI) actuel fourni, et
le signal de bruit est généré en fonction des valeurs caractéristiques statistiques déterminées (AVG, V) et est émis comme signal de sortie (OST).

5. Procédé selon la revendication 4, **caractérisé en ce qu'**une fonction de vraisemblance est utilisée pour l'entraînement en tant que fonction d'erreur à minimiser.

6. Procédé selon la revendication 4 ou 5, **caractérisé en ce que**
sont utilisées comme valeurs caractéristiques une valeur moyenne (AVG), une variance (V), un écart-type, une valeur de probabilité et/ou un type de distribution de la distribution statistique.

7. Procédé selon l'une des revendications précédentes, **caractérisé en ce que**
le signal de fonctionnement d'entrée (SI) actuel est saisi en continu et fourni au réseau neuronal (NN, BNN), et **en ce que**, au moyen du réseau neuronal (NN, BNN), on exploite un simulateur (DT) fonctionnant en parallèle, en particulier un jumeau numérique du système technique (TS).

8. Dispositif de commande (CTL1, CTL2) pour commander un système technique (TS), agencé pour mettre en oeuvre un procédé selon l'une des revendications précédentes.

9. Produit de programme informatique comprenant des instructions qui, lorsque le programme est exécuté par un ordinateur, amènent celui-ci à exécuter un procédé selon l'une quelconque des revendications 1 à 7.

10. Support de stockage lisible par ordinateur contenant un produit de programme informatique selon la revendication 9.
